# EUROPEAN PATENT APPLICATION

(11) **EP 3 647 114 A1**
(43) Date of publication of application: **06.05.2020**
(21) Application number: 18382773.2
(22) Date of filing: 31.10.2018
(51) Int. Cl.: B60Q 1/076, B60Q 1/00, F21S 45/50

(54) **AUTOMOTIVE LIGHTING DEVICE**

(71) Applicant: VALEO ILUMINACION, S.A., 23600 Martos (ES)
(72) Inventor: ANGILELLA, Yoann, 23600 MARTOS (ES); GUERRERO, Alexis, 23600 MARTOS (ES); PEÑA, David, 23600 MARTOS (ES); TORRES GONZALEZ, Alejandro, 23600 MARTOS (ES); FERNANDEZ CHAICHIO, Ricardo, 23600 MARTOS (ES)
(74) Representative: Valeo Vision

(57) **Abstract**

This invention provides an automotive lighting device (1) comprising a housing (2) with a first hole (21) and a leveller (10). The leveller (10) comprises a positioning shaft (11), a motor configured to move the positioning shaft (11) and a first electric connector (12) to receive electric supply for the motor. There is also a sealing gasket (3) to provide a watertight seal around the first hole (21). The sealing gasket (3) is located between the leveller (10) and the housing (2), thus creating a watertight isolation between a first portion of the leveller and the exterior of the housing (2), wherein this first portion of the leveller (10) comprises the positioning shaft (11) and the first electric connector (12).

## Description

### TECHNICAL FIELD

This invention is related to the field of accessory parts comprised in automotive lighting devices, and more particularly, with levellers.

### STATE OF THE ART

When manufacturing a lighting device, lighting modules are both mechanically and electrically connected into the lighting device housing. Positioning of these lighting modules is carried out during manufacturing and during the vehicle assembly, so that the lighting module is set in its correct position.

However, when the automotive vehicle is being used, the user may require to move the lighting module, due to the passengers and luggage weight which may cause the trajectory of the light beam to be modified. This trajectory may be corrected by a leveller, which may cause a small angular bias in the position of the light module. Sometimes, this bias is required by the user and in other vehicles, this is done automatically.

In any case, a leveller is required to perform this functionality. Levellers are therefore installed in mechanical connection with the light modules and usually comprise a positioning shaft ending in a ball joint, to achieve a proper correction in the angular positioning of the lighting module.

Also, these levellers comprise a small motor which actuates on the positioning shaft. As a consequence, this is not a small part, and must be fed by electrical power supply.

This part should be replaceable, so that in the event the motor fails, the rest of the lighting module may be operative just by replacing this single part. Otherwise, the whole lighting device should be replaced, which is not worthy in terms of cost and time.

Current lighting devices locate this leveller in compromised positions, and it is sometimes difficult to access it and replace it. A solution to the aforementioned problem is therefore sought.

### DESCRIPTION OF THE INVENTION

The invention provides an alternative solution for improving the replacement of a leveller by an automotive lighting device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an automotive lighting device comprising
a housing with a first hole intended to receive a leveller
a leveller comprising a positioning shaft, a motor configured to move the positioning shaft and a first electric connector to receive electric supply for the motor;
a second electric connector arranged inside the housing and configured to provide electric supply to the first electric connector
a sealing gasket to provide a watertight seal around the first hole
wherein the sealing gasket is located between a portion of the leveller and the housing, thus creating a watertight isolation between a first portion of the leveller and the exterior of the housing, wherein this first portion of the leveller comprises the positioning shaft and the first electric connector.

This automotive lighting device comprises a leveller which is easily replaceable, since it has a portion which is outside the housing, and wherein the electric connection is kept safe from the environment present in the exterior of the housing. Further, space is saved inside the housing, because there is no need that the motor is inside the housing. Further, the first hole only needs to be big enough to provide access to the positioning shaft and the first electric connector, so there is a small impact on the shape requirements of the housing design.

Further, since the electric connection between the housing and the leveller is carried out by means of a dedicated connection which takes place in the interior of the housing, there is no need to provide an extra wire to connect the leveller to the electric supply when the lighting device is installed in the vehicle.

In some particular embodiments, the housing comprises a dedicated parking for the second electric connector.

A dedicated parking provides a stable positioning for the second connector, so that the electric connection between the leveller and this second connector is easy and reliable.

In some particular embodiments, the first portion comprises a main wall from where the positioning shaft and the first electric connector protrude. In some particular embodiments, the main wall covers the first hole and presses the sealing gasket against the housing.

A wall is an advantageous element to cover the first hole of the opening without taking unnecessary space inside the housing. Further, it accomplishes a good sealing press against the housing.

In some particular embodiments, the leveller is attached to the housing by means of connecting screws which are accessible from the exterior of the housing.

This is an easy way of providing a detachable joint between the leveller and the housing and a good way of providing a sealing pressure in the joint of the leveller against the housing.

In some particular embodiments, the positioning shaft ends in a ball stud. A ball stud is an advantageous way of connecting a spherical bearing of a lighting module which is to be levelled.

In some particular embodiments, the first hole is smaller than the leveller.

The first hole does not need to be as big as the leveller, since the leveller is not intended to cross the first hole completely. Only the positioning shaft and the connection between the first connector and the second connector are required to fit in the first hole. The rest of the leveller may be kept outside the housing. As a consequence, there is no need of a big first hole, since it is not necessary for reproducing the invention. This saves design problems in the housing's arrangement.

In some particular embodiments, the sealing gasket is one piece with the leveller.

The leveller may comprise a soft or elastic portion that may work as a sealing gasket, to improve the installation of this part.

In some particular embodiments, the automotive lighting device is a headlamp.

This invention is particularly advantageous for a headlamp, which comprises lighting modules which require a leveller to be positioned during the normal operation of the automotive vehicle.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a perspective view of the rear part of a housing of an automotive lighting device according to the invention, where a leveller is to be installed.
Figure 2 shows a side section view of the connection between the leveller and the housing in an automotive lighting device according to the invention.
Figure 3 shows a perspective view from the interior of the housing of an automotive lighting device according to the invention.
Figure 4 shows an automotive lighting device of the invention installed in an automotive vehicle.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

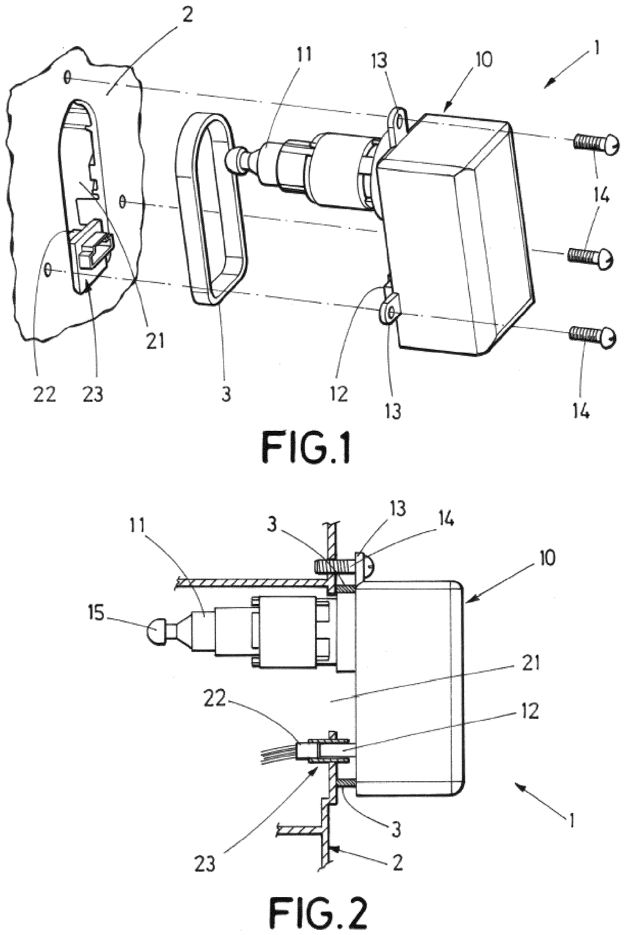

Figure 1 shows a perspective view of the rear part of a housing 2 of an automotive lighting device 1 according to the invention, where a leveller 10 is to be installed.

The housing 2 comprises a first hole 21, where the leveller is to be partially introduced, and a second electric connector 22, which is configured to provide electric supply. The leveller comprises a positioning shaft 11, a motor and a first electric connector 12. The motor is configured to move the positioning shaft, and is placed inside the leveller housing. The first electric connector 12 is intended to be coupled to the second electric connector 22 of the housing 2.

In the installing of the leveller 10, a sealing gasket 3 is used to create a watertight sealing inside the housing 2, isolating the elements which are inside the housing from the environment outside the housing. Due to the configuration of the leveller, a first portion of the leveller is isolated from the exterior of the housing by means of this sealing gasket. This first portion includes the positioning shaft 11 and the first electric connector 12.

The housing comprises a dedicated parking 23 for the second electric connector 22. This dedicated parking 23 ensures a stable position and a correct mechanical feedback when the leveller 10 is to be installed in the housing 2.

The leveller comprises attaching holes 13 which are configured to receive connection screws 14 which will provide a pressure attachment between the leveller 10 and the housing 2. Since the sealing gasket 3 is interposed between the leveller 10 and the housing 2, the pressure provided by the connection screws 14 will provide a watertight sealing in the interior of the housing 2. These connection screws 14 are accessible from the exterior of the housing 2, for an easy replacement of the leveller 10 if required.

Figure 2 shows a side section view of the connection between the leveller and the housing in an automotive lighting device according to the invention.

In this figure, both the housing 2, the sealing gasket 3 and the leveller 10 are shown in a section cut.

The positioning shaft 11 ends in a ball stud 15, which is particularly suitable for receiving a spherical bearing of a lighting module which is to be tuned by the leveller 10.

As may be seen in this figure, the first hole 21 is smaller than the leveller 10. Only a relatively small hole is required in the housing 2, thus providing a small interference in the design of the housing and an easy replacement of the leveller 10, which does not need to be totally introduced in the housing 2.

In other embodiments not shown in this figure, the sealing gasket is one piece with the leveller. As the person skilled in the art may construe, this embodiment is derived from this figure with no additional effort.

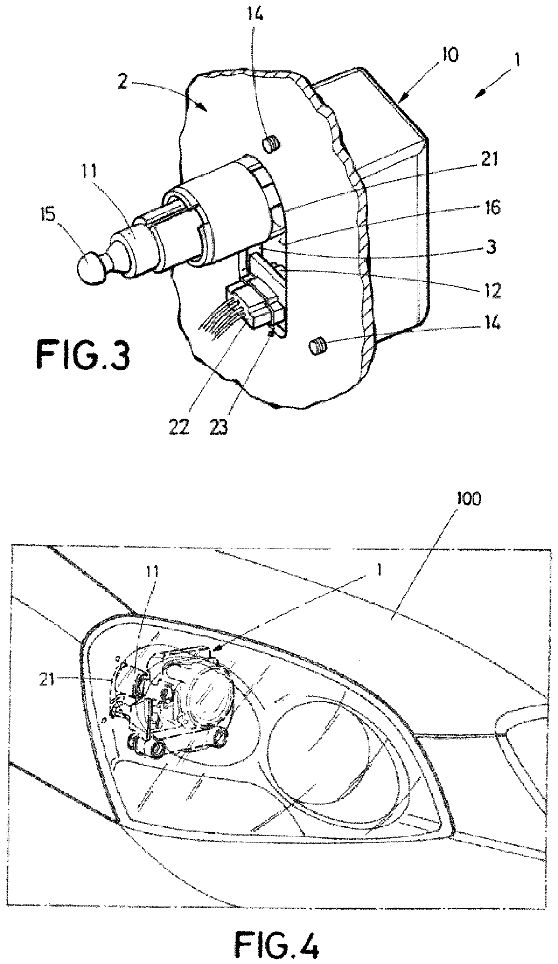

Figure 3 shows a perspective view from the interior of the housing, where the leveller is partially seen once it has already been installed in the housing 2.

This leveller comprises a main wall 16 from where the positioning shaft 11 ending in the ball stud 15 and the first electric connector 12 protrude. This main wall 16 covers the first hole and presses the sealing gasket (not seen) against the housing 2.

Figure 4 shows an automotive lighting device 1 of the invention installed in an automotive vehicle 100. In this case, the lighting device 1 is a headlamp. This automotive vehicle will not have the complete lighting device 1 replaced if the motor of the leveller fails, and saves manufacturing time since the leveller is already connected to the lighting device 1 and no further electric connections are required during the vehicle manufacturing process.

## Claims

1. Automotive lighting device (1) comprising
a housing (2) with a first hole (21);
a leveller (10) comprising a positioning shaft (11), a motor configured to move the positioning shaft (11) and a first electric connector (12) to receive electric supply for the motor;
a second electric connector (22) arranged inside the housing (2) and configured to provide electric supply to the first electric connector (12);
a sealing gasket (3) to provide a watertight seal around the first hole (21);
wherein the sealing gasket (3) is located between the leveller (10) and the housing (2), thus creating a watertight isolation between a first portion of the leveller and the exterior of the housing (2), wherein this first portion of the leveller (10) comprises the positioning shaft (11) and the first electric connector (12).

2. Automotive lighting device (1) according to claim 1, wherein the housing (2) comprises a dedicated parking (23) for the second electric connector (22).

3. Automotive lighting device (1) according to any of the preceding claims, wherein the first portion comprises a main wall (16) from where the positioning shaft (11) and the first electric connector (12) protrude.

4. Automotive lighting device (1) according to claim 3, wherein the main wall (16) covers the first hole (21) and presses the sealing gasket (3) against the housing (2).

5. Automotive lighting device (1) according to any of the preceding claims, wherein the leveller (10) is attached to the housing (2) by means of a connecting element, such as connecting screws (14), a bolt or a rivet, which are accessible from the exterior of the housing (2).

6. Automotive lighting device (1) according to any of the preceding claims, wherein the leveller (10) is attached to the housing (2) by means of a clipping connection.

7. Automotive lighting device (1) according to any of the preceding claims, wherein the positioning shaft (11) ends in a ball stud (15).

8. Automotive lighting device (1) according to any of the preceding claims, wherein the first hole (21) is smaller than the leveller (10).

9. Automotive lighting device (1) according to any of the preceding claims, wherein the sealing gasket (3) is one piece with the leveller (10).

10. Automotive lighting device (1) according to any of the preceding claims, wherein the automotive lighting device is a headlamp.
